# EUROPEAN PATENT SPECIFICATION

(11) **EP 3 800 215 B1**
(45) Date of publication and mention of the grant of the patent: **20.04.2022**
(21) Application number: 20198718.7
(22) Date of filing: 28.09.2020
(51) Int. Cl.: C08G 65/331, C08G 65/333, C08G 59/50, C08G 59/58, C09D 11/102

(54) **DISPERSING AGENT**
DISPERGIERMITTEL
AGENT DE DISPERSION

(30) Priority: 02.10.2019 CN 201910946112
(43) Date of publication of application: 07.04.2021
(73) Proprietor: Siegwerk Druckfarben AG & Co. KGaA, 53721 Siegburg (DE)
(72) Inventor: Jin, ZhiLai, Shanghai, Shanghai 201100 (CN); Gong, Tao, Shanghai, Shanghai 201100 (CN); Shao, Huanzhen, Shanghai, Shanghai 201101 (CN); Noirot, Pierre-Antoine, 74800 Arenthon (FR)
(74) Representative: Hepp Wenger Ryffel AG

(56) References cited:
- WO-A1-2008/018873
- US-A1- 2008 047 462
- US-A1- 2017 292 030

## Description

The present invention is related to a dispersing agent that may be used for the manufacture of printing ink and coating compositions, such as inkjet compositions.

When solid particles such as pigments or fillers are to be dispersed in a liquid medium for forming a composition, there is a risk that after initial dispersion under stirring, the solid particles may agglomerate again and form a sediment in the container where the composition is stored. Furthermore, lack of stability of the dispersion results also in an increase of viscosity and decrease of optical properties like colour strength or gloss.

In order to alleviate the formation of such a dispersion and enhance its stability, it has been known to modify the surface of the solid particles, or to add a dispersing agent to the composition.

In US-2011/0054075 A1, a dispersing agent having a polyurethane backbone was described.

In US-2017/0292030 A1, a dispersing agent was described which is a comb polymer made from at least one diglycidyl ether, at least one polyether monoamine, at least one primary amine and optionally at least one secondary amine. The copolymer has a backbone of moieties derived from the diglycidyl ether interconnected via amino groups. From this backbone, side chains extend, so that the structure of the copolymer resembles a comb.

The known dispersing agents were typically developed for solving a specific problem. The dispersant of US-2011/0054075 A1 was developed for preparing mill bases where a particulate solid is milled in a liquid medium in the presence of film-forming resin binder (see e.g. section [0066]). The dispersant of US-2017/0292030 A1 was developed for making dispersions containing finely divided carbon black pigments.

There was a need for a dispersing agent than can be used for dispersing any commonly pigment in a CMYK ink set, and that allows a more efficient and simplified manufacture of an ink composition.

The above problem has been solved by the dispersant according to the present invention.

In detail, the present invention is related to a dispersing agent which is a polymer with a backbone prepared from the following components a) to c):
a) at least one diglycidylether or diglycidylester having the formula (I) 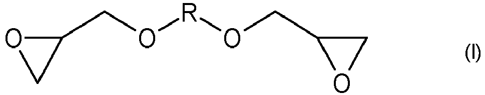 wherein R is a linear or branched C₁₋₃₆ alkylene, preferably C₂₋₁₈, most preferably C₂₋₁₂ moiety, or a moiety of the formula 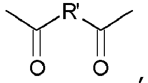 wherein R' is a linear or branched C₁₋₃₆ alkylene, preferably C₂₋₁₈, most preferably C₂₋₁₂ moiety;
b) at least one polyetheramine having the formula (II) 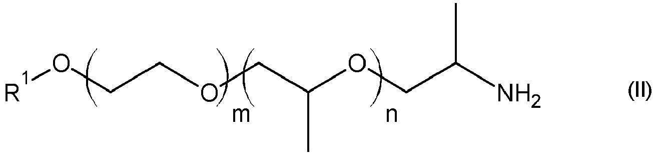 wherein
   - R¹: is a linear or branched C₁₋₆ alkyl moiety
   - m: is an integer in the range from 1 to 50
   - n: is an integer in the range from 1 to 50
c) at least one unsaturated dicarboxylic acid of the formula (III) 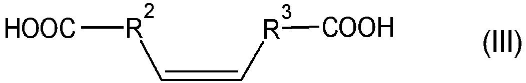 wherein
   R² and R³ independently from each other are absent or a linear or branched C₁₋₆ alkylene moiety,
   or itaconic acid,
   or two acrylic acid moieties,
   wherein attached to the double bond of said at least one unsaturated dicarboxylic acid of the general formula (III) or itaconic acid is at least one amine
   of the following formula (IV) 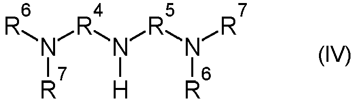 wherein
   - R⁴ and R⁵: independently from each other are a linear or branched C₁₋₆ alkylene moiety,
   - R⁶ and R⁷: independently from each other are a linear or branched C₁₋₁₈ alkyl moiety, preferably C₁₋₆ alkyl moiety, or are connected with each other so as to form a cyclic nitrogen-containing moiety, preferably cyclohexylamine or piperazine;
or a secondary amine of the formula R⁶-NH-R⁷, wherein R⁶ and R⁷ have the same meaning as above,
or imidazole or derivatives thereof,
or benzimidazole or derivatives thereof,
wherein in case two acrylic acid moieties are selected as component C) , the amine is a primary amine H₂N-R⁸, wherein R⁸ is a residue R⁴-NR⁶R⁷,wherein R⁴, R⁶ and R⁷ are as defined above; wherein optionally said amine of formula (IV) is in the form of an amine salt.

It has been surprisingly found that the dispersing agent according to the present invention can be used for dispersing a wide range of commonly used pigments of CMYK ink sets and spot colors, without the necessity of the incorporation of a resin (as a binder component) into the ink composition.

The dispersing agent according to the present invention has a comb-like structure. It is a copolymer having a backbone structure where moieties derived from a diglycidyl ether or a diglycidylester, and an unsaturated dicarboxylic acid are alternately provided, preferably in the form of blocks that are interconnected with each other by an amino group from a polyether monoamine.

Linked to said backbone are side chains. These side chains are, on the one hand, the polyether moieties of the polyether monoamine whose amino group is built into the backbone. On the other hand, additional side chains are provided by reacting an amine having one secondary amino group with the unsaturated bond of the unsaturated dicarboxylic acid moieties in the backbone.

According to a preferred embodiment of the present invention, said amine that is attached to the unsaturated dicarboxylic acid moieties in the backbone, or in the alternative connects two acrylic acid moieties in the backbone with each other, is converted into a corresponding amine salt. As will be explained below in detail, this can be done by reaction with an acid, leading to a protonation of amino groups, or by reacting with a quaternization agent, leading to a quaternization of the amino groups.

For the formation of the backbone of the dispersing agent of a preferred embodiment the present invention, a diglycidyl ether (D), an unsaturated dicarboxylic acid (C) and a polyether amine (A) are reacted with each other. In principle, these components may react with each other as follows (shown below for exemplary compounds):

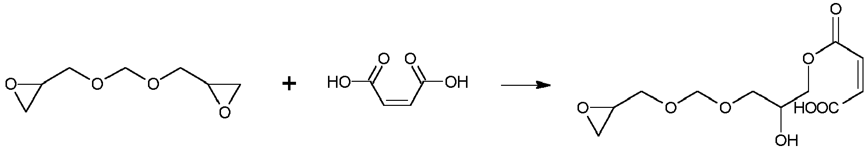

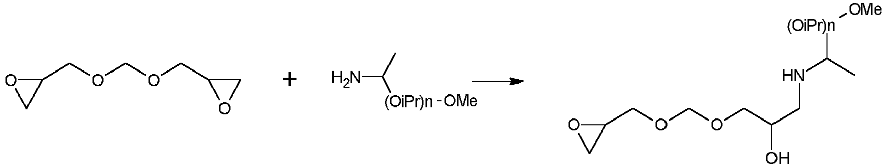

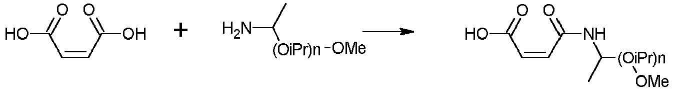

Above, the formation of different dimers D-C, D-A and C-A is illustrated. In the same manner, trimeric blocks of D-C-D (by reaction of the free carboxylic group of the D-C dimer with a further D monomer), D-A-D (by reaction of the secondary group of the D-A dimer with a further D monomer), or other similar blocks may be made.

According to a very preferred embodiment of the present invention, the dispersing agent has the general formula (V) 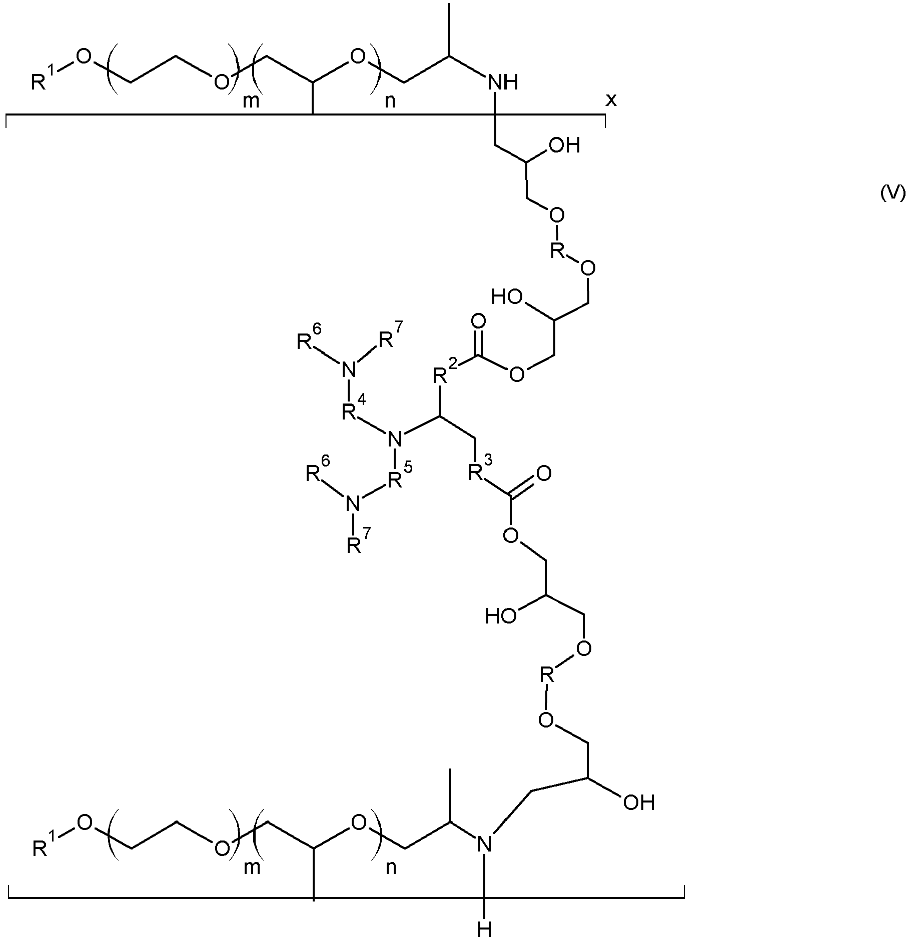 wherein R, R¹ to R⁷, m and n have the same meaning as defined above, and x is an integer in the range from 1 to 20, and wherein one or more of the tertiary amino groups may be protonated or quaternized.

Here, the backbone of the dispersing agent consists of D-C-D blocks which are interconnected by the amino group of the polyether amine.

The reactions that occur between the monomers D, C and A (epoxide ring opening by a nucleophilic substitution mechanism, amide formation) are well-known and do not have to be discussed in detail. The reaction conditions to be chosen for those types of reaction typically involve heating the substances to be reacted with each other in a range of 40-200°C, preferably 50-150°C and more preferably 60-120°C, for a sufficient amount of time, typically 1 to 24 h, preferably 2 to 20 h and more preferably 5 to 15 h.

The reactions are typically carried out under stirring. Depending on the substances to be reacted with each other, an organic solvent may be used. Conventionally used solvents for these reactions have to be inert under the applied reaction conditions and capable of dissolving the substances to be reacted with each other. Depending on the reaction conditions, ether solvents such as diethyl ether, or ester solvents such as ethyl acetate may be used.

Optionally, catalysts conventionally employed in such reactions, for example Bronsted or Lewis acids or bases, or phenol type inhibitors, for examples MEHQ (hydroquinone monomethylether), may be added.

The molar ratios in which the substances to be reacted with each other are added are chosen depending on the building blocks to be synthesized. For the preparation of a building block of the type D-C, D-A etc., a stoichiometric ratio of 1:1 of the substances to be reacted with each other is preferred. For the preparation of a building block of the type D-A-D (i.e. 2 glycidyl ether/ester molecules D are to be interconnected via an amino group of a polyether amine A), a stoichiometric ratio of glycidyl ether/ester D to polyether amine A of around 2:1 (e.g. 1.5:1 to 3.1) is preferred. The same applies for the preparation of similar building blocks such as D-C-D.

The main constituents of the backbone of the dispersing agent of the present invention are at least one diglycidyl ether/ester D and at least one unsaturated carboxylic acid C. In the chain generated by reaction of these monomers, an amino group of a polyether amine A as connecting moiety may be inserted. According to the present invention, it is preferred that the dispersing agent only comprises one type of diglycidyl ether/ester D and one type of unsaturated carboxylic acid C. However, it is also possible that different types of diglycidyl ethers/esters D and/or unsaturated carboxylic acids C may be incorporated into the backbone of the dispersing agent.

As one monomer for forming the backbone of the dispersing agent of the present invention, there is used at least one diglycidyl ether or diglycidylester having the formula (I) 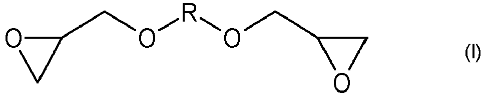 wherein R is a linear or branched C₁₋₃₆ alkylene, preferably C₂₋₁₈, most preferably C₂₋₁₂ moiety, or a moiety of the formula 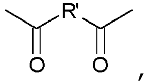 wherein R' is a linear or branched C₁₋₃₆ alkylene, preferably C₂₋₁₈, most preferably C₂₋₁₂ moiety.

According to a preferred embodiment, R is a linear or branched C₂₋₁₈ alkylene moiety, more preferably selected from the group consisting of -CH₂CH₂-, -CH₂CH₂CH₂-, -CH₂CH₂CH₂CH₂-, -CH₂CH₂CH₂CH₂CH₂-, and -CH₂CH₂CH₂CH₂CH₂CH₂-. According to the present invention, diglycidyl ethers as defined above are preferred. Especially preferred diglycidyl ethers for the purposes of the present invention are 1,4-butanediol glycidyl ether, 1,5-pentanediol glycidyl ether, and 1,6-hexanediol glycidyl ether.

These diglycidyl ethers are commercially available and can also be synthesized by common methods, e.g. by reaction of epichlorohydrin with the respective diol.

As a further monomer for forming the backbone of the dispersing agent of the present invention, there is used at least one polyether amine having the formula (II) 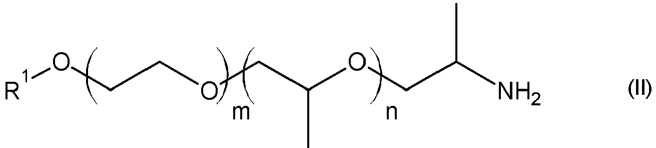 wherein
- R¹: is a linear or branched C₁₋₆ alkyl moiety
- m: is an integer in the range from 1 to 50
- n: is an integer in the range from 1 to 50.

According to a preferred embodiment of the present invention, there is used at least one polyether amine having the above formula (II) wherein
- R¹: is a linear or branched C₁₋₄ alkyl moiety, preferably selected from the group consisting of -CH₃,-CH₂CH₃, and -CH₂CH₂CH₃, most preferably -CH₃,
- m: is an integer in the range from 1 to 10, preferably 2 to 8, and
- n: is an integer in the range from 5 to 40, preferably 10 to 30.

Polyether amines useful for the purposes of the present invention are based on a polyethylene-polypropylene backbone and comprise a terminal primary amino group. The ethylene oxide and propylene oxide moieties can be arranged in any sequence, for example in the form of ethylene oxide blocks and propylene oxide blocks (e.g. 5 ethylene oxide moieties followed by 5 propylene oxide moieties) or statistically (i.e. random arrangement of ethylene oxide and propylene oxide moieties in the backbone).

According to the present invention, polyether amines of formula (II) can be used which comprise either the same amount of propylene oxide and ethylene oxide moieties, or else comprise more propylene oxide than ethylene oxide moieties or more ethylene oxide than propylene oxide moieties. Preferred polyether amines having the above formula (II) comprise more propylene oxide than ethylene oxide moieties in the backbone, i.e. n>m. Especially preferred, the ratio of n:m is in the range from 2:1 to 6:1, particularly preferred 3:1 to 5:1.

Particularly preferred polyether amines having the above formula (II) have a methoxy end group, i.e. R¹ is methyl (-CH₃). Even more particularly preferred polyether amines having the above formula (II) have a methoxy end group, i.e. R¹ is methyl (-CH₃), in combination with a ratio of n:m in the range from 2:1 to 6:1, particularly preferred 3:1 to 5:1.

Polyether amines having the above formula (II) are commercially available, for example under the trade name Jeffamine^{®} from Huntsman. Examples are Jeffamine^{®} M-600, Jeffamine^{®} M-1000, Jeffamine^{®} M-2005, and Jeffamine^{®} M-2070.

As a further monomer for forming the backbone of the dispersing agent of the present invention, there is used at least one unsaturated dicarboxylic acid of the formula (III) 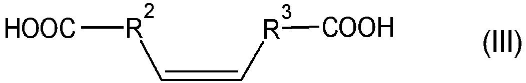 wherein
R² and R³ independently from each other are absent or a linear or branched C₁₋₆ alkylene moiety, or itaconic acid.

According to an alternative embodiment, two acrylic acid molecules can be used instead of the above dicarboxylic acid of formula (III).

These unsaturated dicarboxylic acids of the formula (III) serve, inter alia, as building blocks to which the amines of the formula (IV) described below can be attached. In the alternative embodiment where two acrylic acid molecules are used instead of the above dicarboxylic acid of formula (III), a primary amine of the formula H₂NR⁸, as defined above, is reacted with said two acrylic acid molecules, so that the acrylic acid molecules are linked via the nitrogen atom of the primary amino group.

According to the present invention, unsaturated dicarboxylic acids of the formula (III) are preferred wherein R² and R³ independently from each other are absent or a linear or branched C₁₋₃ alkylene moiety.

According to the present invention, cis- and trans-unsaturated dicarboxylic acids can be used. Cis-unsaturated dicarboxylic acids are preferred.

Examples of suitable unsaturated dicarboxylic acids of the formula (III) are: 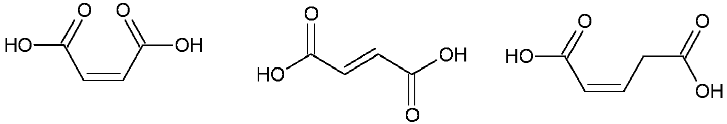 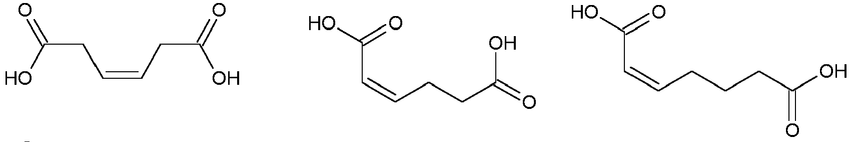 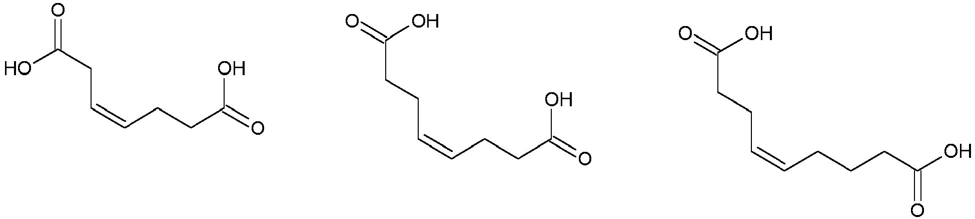 Especially preferred unsaturated dicarboxylic acids of formula (III) are maleic acid and fumaric acid (where R² and R³ are absent), cis-glutaconic acid (where R² is absent and R³ is CH₂) , cis-2-hexene diacid (where R² is absent and R³ is CH₂CH₂), and cis-3-hexene diacid (where R² is CH₂ and R³ is CH₂) . Especially preferred are maleic acid, fumaric acid and cis-glutaconic acid. Mostly preferred is maleic acid.

The unsaturated dicarboxylic acids of the formula (III) are commercially available or can be synthesized by methods commonly known in the art.

As described above, the monomers of formulas (I), (II), and (III) are reacted together to form the backbone of the dispersing agents of the present invention. According to a preferred embodiment, said backbone has the following structure: 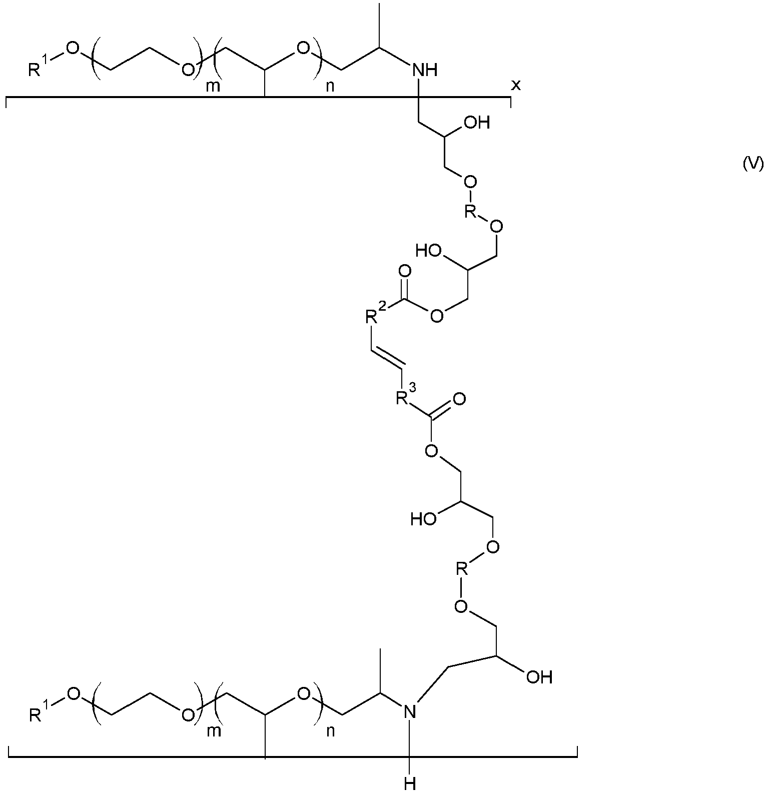 Said backbone has a sequence of monomers D-C-D-A in its repeating unit. R, R¹ to R³, m and n have the same meaning as defined above, and the repeating unit x may be an integer in the range from 1 to 20, preferably 3 to 15, especially preferred 5 to 10.

An example of a backbone made according to example 1 below from 1,6-hexanediol diglycidyl ether, Jeffamine^{®} M-2005 and maleic acid has the following structure:

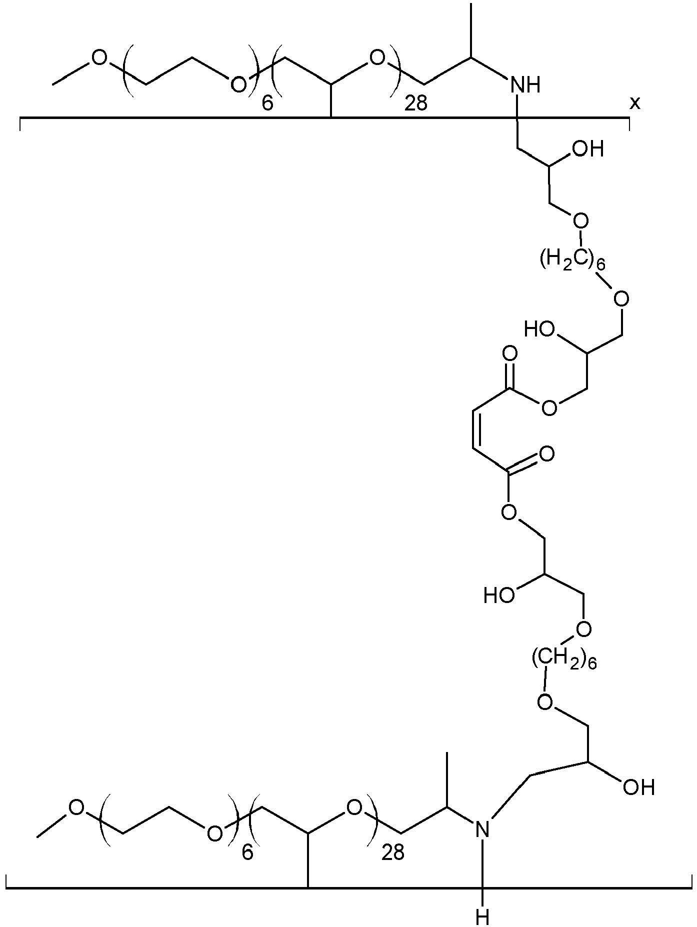

The repeating unit x may be an integer in the range from 1 to 20, preferably 3 to 15, especially preferred 5 to 10. Linked to the backbone are comb-like polyether moieties stemming from the polyether amine of formula (II).

Said backbone comprises unsaturated carbon-carbon double bonds. According to the present invention, these unsaturated carbon-carbon double bonds are used for attaching amines to the backbone.

Thus, according to the present invention, there is attached to the double bond of said at least one unsaturated dicarboxylic acid of the general formula (III) at least one amine of the following formula (IV) 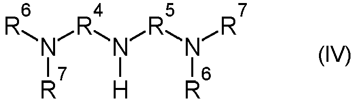 wherein
- R⁴ and R⁵: independently from each other are a linear or branched C₁₋₆ alkylene moiety,
- R⁶ and R⁷: independently from each other are a linear or branched C₁₋₁₈ alkyl moiety, preferably C₁₋₆ alkyl moiety, or together are connected with each other so as to form a cyclic nitrogen-containing moiety, preferably cyclohexylamine or piperazine;
or a secondary amine of the formula R⁶-NH-R⁷, wherein R⁶ and R⁷ have the same meaning as above,
or imidazole or derivatives thereof,
or benzimidazole or derivatives thereof.

According to an alternative embodiment where two acrylic acid moieties are selected as component C), the amine is a primary amine H₂N-R⁸, wherein R⁸ is a residue R⁴-NR⁶R⁷, wherein R⁴, R⁶ and R⁷ are as defined above.

According to a preferred embodiment of the present invention, at least one amine of the above formula (IV) is used wherein
- R⁴ and R⁵: independently from each other are a linear or branched C₁₋₄ alkylene moiety,
- R⁶ and R⁷: independently from each other are a linear or branched C₁₋₃ alkyl moiety, preferably methyl.

Particularly preferred amines where R⁴ and R⁵ are both linear C₁₋₄ alkylene moieties, especially preferred selected from the group consisting of -CH₂-, -CH₂CH₂-, and -CH₂CH₂CH₂-, and R⁶ and R⁷ are both methyl:

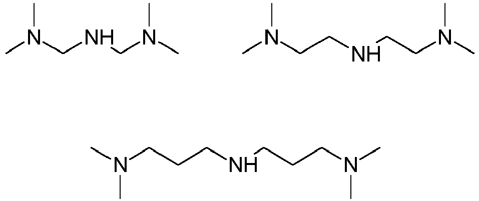

The amines of the formula (IV) are commercially available or can be synthesized by methods commonly known in the art.

Another preferred amine to be used according to the present invention is a secondary amine of the formula R⁶-NH-R⁷, wherein R⁶ and R⁷ have the same meaning as above, i.e. R⁶ and R⁷ independently from each other are a linear or branched C₁₋₁₈ alkyl moiety, preferably C₁₋₆ alkyl moiety, or together are connected with each other so as to form a cyclic nitrogen-containing moiety, preferably cyclohexylamine or piperazine. Examples of such secondary amines are dialkyl amines such as ditridecyl amine, or cyclic amines such as cyclohexyl amine or piperazine.

According to the alternative embodiment where the above defined primary amine is used, preferably a N,N-dimethyl ethylene diamine or N,N-diethyl propylene diamine is used.

The amines of the formula (IV), or the other amines mentioned above as alternative, can be reacted with the double bonds of said at least one unsaturated dicarboxylic acids of the general formula (III), or with the double bonds of said acrylic acid molecules, by a Michael addition reaction. The resulting dispersing agent has the general formula (V): 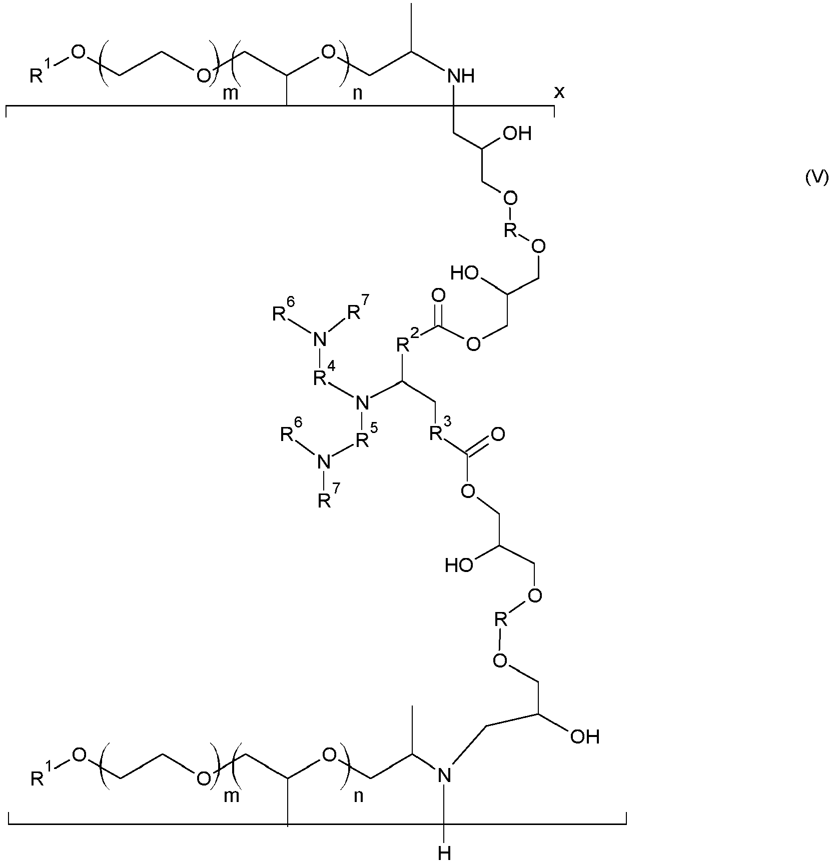 wherein R, R¹ to R⁷, m and n have the same meaning as defined above, and the repeating unit x may be an integer in the range from 1 to 20, preferably 3 to 15, especially preferred 5 to 10, in case an amine of formula (IV) is used.

An example of a backbone made according to example 1 below from 1,6-hexanediol diglycidyl ether, Jeffamine^{®} M-2005 and maleic acid and N,N,bis-(3-dimethylaminopropyl) amine has the following structure: 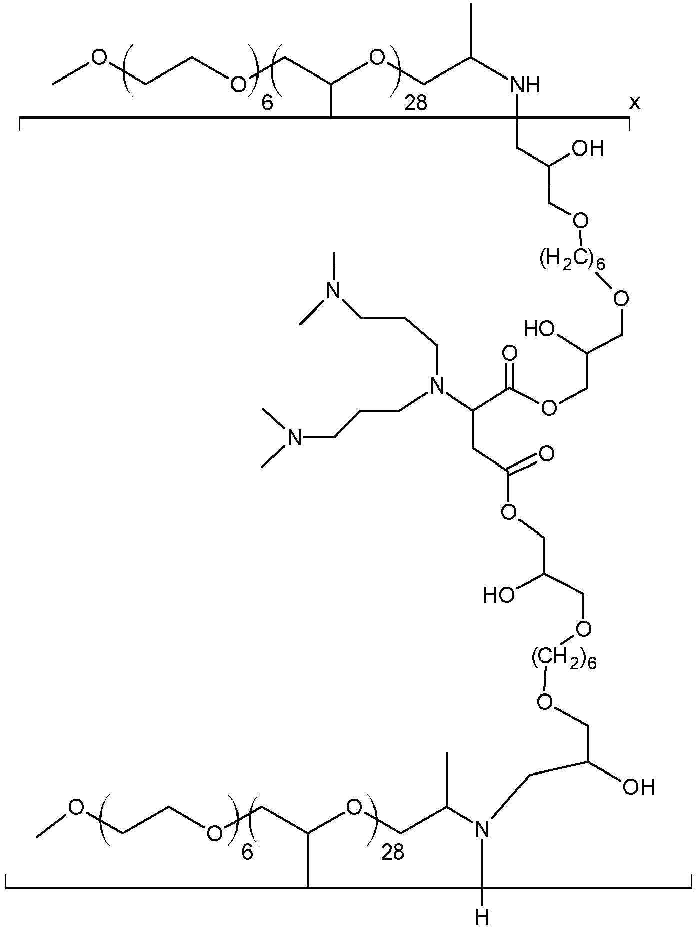 wherein x may be an integer in the range from 1 to 20, preferably 3 to 15, especially preferred 5 to 10.

The conditions for carrying out a Michael addition reaction are known in the art. For example, the reaction may be carried out according to the present invention under heating (in the range of 10 to 100°C, preferably 30 to 90°C) and stirring, optionally in the presence of an organic solvent which is inert under the applied reaction conditions and capable of dissolving the substances to be reacted with each other, and optionally in the presence of an inhibitors such as MHEQ. Depending on the reaction conditions, ether solvents such as diethyl ether, or ester solvents such as ethyl acetate may be used.

According to a preferred embodiment of the present invention, one or more of the tertiary amino groups of the dispersing agent of formula (V) may be converted into an amine salt. This can be carried out by methods known in the art, i.e. by reaction with an acid or by reaction with a quaternization agent.

The reaction of a tertiary amine with an acid results in the protonation of the amine, and thus to the formation of an ammonium cation. According to the present invention, acids conventionally used for this type of reaction may be used also here. For example, mineral acids such as HCl or organic acids such as acetic acid may be used.

The reaction of a tertiary amine with a quaternization agent results in the formation of a quaternized amine, i.e. a functional group where the nitrogen atom carries 4 organic substituents. According to the present invention, quaternization agents conventionally used for this type of reaction may be used also here. According to a preferred embodiment of the present invention, the quaternization agent is selected from the group consisting of an alkyl halogenide and an aralkyl halogenide, preferably an alkyl chloride or an aralkyl chloride, most preferably benzyl chloride, or dimethyl sulfate, or oxirane.

The conditions for carrying out such a protonation or quaternization reaction are known in the art. For example, the reaction may be carried out according to the present invention under heating (in the range of 50 to 100°C, preferably 60 to 90°C) and stirring.

The resulting dispersing agent has the following general formula (VI) : 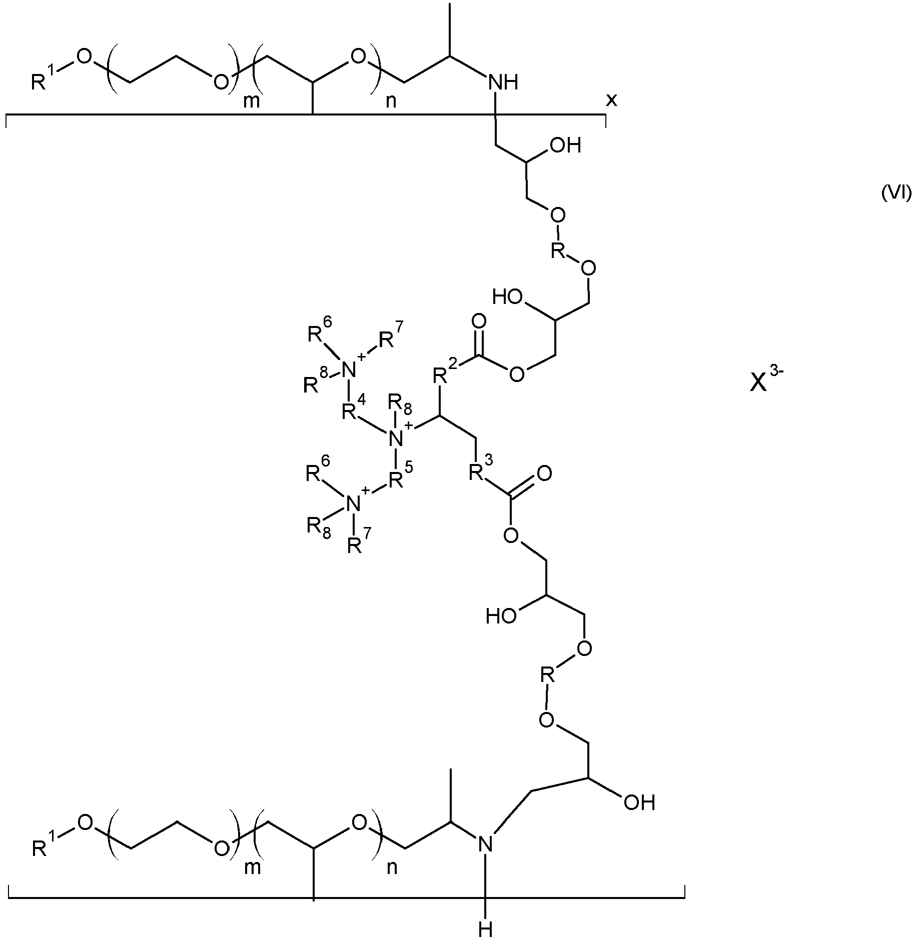 wherein R, R¹ to R⁷, m and n have the same meaning as defined above, and the repeating unit x may be an integer in the range from 1 to 20, preferably 3 to 15, especially preferred 5 to 10. R⁸ may be a C₁₋₆ alkyl, or a C₇₋₁₁ aralkyl, and X may be a respective counter-ion such as a halogenide, preferably chloride.

Thus, according to a particularly preferred embodiment of the present invention, the dispersing agent is in the form of a halogenide salt, preferably a chloride salt, most preferably a benzyl chloride salt.

According to a further aspect, the present invention is related to a process for manufacturing a dispersing agent as defined herein, comprising the steps:
i) reacting at least one diglycidyl ether or diglycidylester having the formula (I) 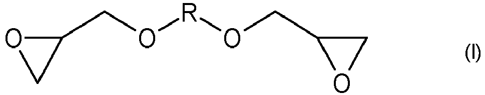 wherein R is as defined above,
   with at least one polyether amine having the formula (II) 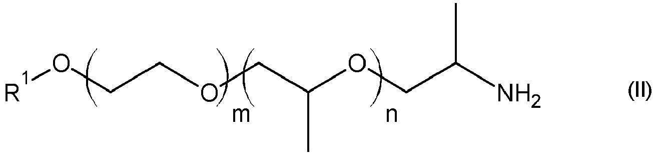 wherein R¹, m and n are as defined above, under heating, optionally in the presence of a solvent,
   and with at least one unsaturated dicarboxylic acid of the formula (III) 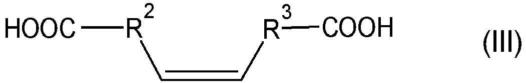 wherein R² and R³ are as defined above, or alternatively with two acrylic acid molecules,
   under heating, optionally in the presence of a solvent,
ii) reacting the intermediate product obtained in step i) with at least one amine of the following formula (IV) 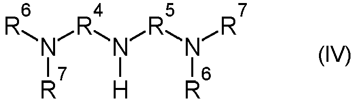 wherein R⁴, R⁵, R⁶ and R⁷ are as defined above,
   or with a secondary amine of the formula R⁶-NH-R⁷, wherein R⁶ and R⁷ have the same meaning as above,
   or imidazole or derivatives thereof,
   or benzimidazole or derivatives thereof;
   or in case two acrylic acid moieties are selected as component C) , with a primary amine H₂N-R⁸, wherein R⁸ is a residue R⁴-NR⁶R⁷, wherein R⁴, R⁶ and R⁷ are as defined above;
   thus obtaining a compound, preferably a compound of the formula (V), under heating, optionally in the presence of a solvent,
iii) optionally converting at least one tertiary amino group of the compound, preferably of the compound of the formula (V), into a protonated or quaternized amino salt by reacting the compound, preferably the compound of the formula (V), with an acid or an quaternization agent under heating, optionally in the presence of a solvent.

The process has already been described in detail above. It can be carried out sequentially, or preferably as a one-pot reaction. As is known in the art, a one-pot reaction is a reaction where all reaction steps are carried out in the same reaction vessel, without intermediate purification or isolation steps.

According to a preferred embodiment of the present invention, in step i) first the at least one diglycidyl ether/ester having the formula (I) and the at least one polyether amine having the formula (II) are added together and allowed to react, before the at least one unsaturated dicarboxylic acid of the formula (III) is added.

According to a further preferred embodiment of the present invention, in step i) the polyether amine having the formula (II) and the diglycidyl ether/ester having the formula (I) are used in a molar ratio in a range from 1:1 to 1:5.

When the features that preferably in step i) first the at least one diglycidyl ether/ester having the formula (I) and the at least one polyether amine having the formula (II) are added together and allowed to react, before the at least one unsaturated dicarboxylic acid of the formula (III) is added, and that in step i) the polyether amine having the formula (II) and the diglycidyl ether having the formula (I) are used in a molar ratio in a range from 5:1 to 1,5:1, are realized in combination, preferably building blocks of the structure D-A-D (diglycidyl ether - polyether amine - diglycidyl ether) are formed, along with terminal building blocks D-A. These building blocks can be connected with each other in the subsequent reaction step by reaction with the unsaturated dicarboxylic acid of the formula (III) .

The dispersing agent according to the present invention can be used as a dispersant in a printing ink composition.

It has been found that the dispersing agent according to the present invention can be used as a dispersant for any organic pigment that is commonly used in a CMYK ink set or in spot colors, in typical printing applications.

Thus, the present invention is also related to a printing ink composition, comprising at least one pigment, at least one solvent and a dispersing agent according to the present invention.

The printing ink composition according to the present invention comprises one or more of the dispersing agent of the present invention in an amount of 1 to 10 wt.-%, preferably 3 to 8 wt.-%, based on the amount of the entire printing ink composition. According to the present invention, the percentages of all components of the printing ink composition according to the present invention are meant to sum up to 100 wt.-%.

As pigment, any pigment that is commonly used in a CMYK ink set, in typical printing applications is suitable for the purposes of the present invention, since the dispersing agent of the present invention is widely applicable.

Examples for suitable organic pigments are PY13, PY74, PR57:1, PR146, PR176, PB15:4, PBk7, PV23, PG7, PO34.

The printing ink composition according to the present invention comprises one or more pigments in an amount of 5 to 40 wt.-%, preferably 10 to 30 wt.-%, based on the amount of the entire printing ink composition.

As a solvent, any organic solvent that is commonly used in a CMYK ink set, in typical printing applications is suitable for the purposes of the present invention can be used.

Examples for suitable solvents are all kind of esters and alcohols like ethyl acetate, propyl acetate, butyl acetate, ethanol, n-propanol, i-propanol, or ethoxypropanol.

The printing ink composition according to the present invention comprises one or more solvents in an amount of 40 to 80 wt.-%, preferably 50 to 70 wt.-%, based on the amount of the entire printing ink composition.

As additional component, the printing ink composition according to the present invention may comprise a binder. As a binder, any binder that is commonly used in a CMYK ink set and spot colors, in typical printing applications is suitable for the purposes of the present invention can be used. However, it is especially preferred and an advantage of the dispersing agents of the present invention that no binder is necessary at all in the printing ink composition.

Examples for suitable binders are polyurethane resins, nitro cellulose, PVC, PVB, cellulose ester and acrylates.

The printing ink composition according to the present invention comprises one or more binders in an amount of 0 to 20 wt.-%, preferably 5 to 15 wt.-%, based on the amount of the entire printing ink composition.

In addition, the the printing ink composition according to the present invention may comprise conventionally used additives for printing inks. Examples are rheology modifiers, fillers, waxes, and antifoaming agents. If present, those additive are included in an amount of 0,01 to 10 wt.-%, preferably 0,1 to 5 wt.-%, based on the amount of the entire printing ink composition.

The present invention will now be explained in more detail with reference to non-limiting examples.

### Example 1: Manufacture of a dispersing agent of the invention

5 g 1,6-hexane diol diglycidyl ether and 12.5 g of a commercial polyether amine (Jeffamine^{®} M-2005) were added into a reactor, heated to 110°C and allowed to react under stirring for 10 h.

Thereafter, 1.2 g maleic acid were added into the same reactor, and allowed to react under stirring for 10 h at 110°C.

Thereafter, the reaction mixture was allowed to cool to 70°C. 2 g of TMBPA (N,N-bis-(3-dimethylaminoproyl)amine and 50 g ethyl acetate were added into the reactor, and the mixture was allowed to react under stirring for 8 h at 80°C.

Thereafter, 2.9 g of a commercial polyether amine (Jeffamine^{®} M-2005) were added into a reactor, heated to 110°C and allowed to react under stirring for 2 h.

Thereafter, 2,7 g benzyl chloride were added, and the mixture was allowed to react under stirring for 24 h at 80°C.

The mixture was then cooled, filtrated and the resulting dispersing agent dried.

### Example 2: Manufacture of a printing ink composition of the invention

4,5 g of the dispersing agent of example 1, 24 g of a magenta pigment (Permanent-Carmin FBB 02 from Clariant), 61,5 g ethyl acetate and 10 g of a polyurethane resin were blended using a stirring device such as a paintshaker DAS 200 (2.0 mm zirconia beads) for 2h at 25°C.

The resulting printing ink composition had excellent flow behaviour, a dilution rate (with ethyl acetate) to achieve a viscosity of 28 s (measured by Frikmar 3#) of 35%, excellent transparency and a color strength (as measured by X-Rite eXact^{™} instrument) of 100%.

### Comparative Example 1: Manufacture of a conventional printing ink composition

The printing ink composition of example 2 was reproduced with the exception that no dispersing agent according to the present invention was added.

The resulting printing ink composition did not show any flow behaviour, had a dilution rate (with ethyl acetate) to achieve a viscosity of 28 s (measured by Frikmar 3#) of 60%, poor transparency and a color strength (as measured by X-Rite eXact^{™} instrument) of 80%.

## Claims

1. A dispersing agent which is a polymer with a backbone prepared from the following components a) to c):
a) at least one diglycidyl ether or diglycidylester having the formula (I) 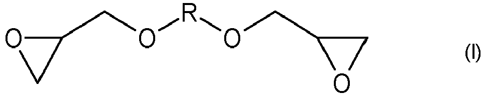 wherein R is a linear or branched
C₁₋₃₆ alkylene, preferably C₂₋₁₈, most preferably C₂₋₁₂ moiety, or a moiety of the formula 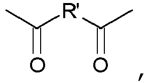 wherein R' is a linear or branched C₂₋₃₆ alkylene, preferably C₂₋₁₈, most preferably C₂₋₁₂ moiety;
b) at least one polyether amine having the formula (II) 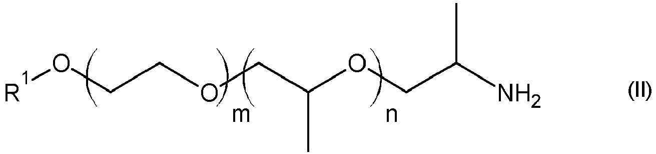 wherein
R¹ is a linear or branched C₁₋₆ alkyl moiety
m is an integer in the range from 1 to 50
n is an integer in the range from 1 to 50
c) at least one unsaturated dicarboxylic acid of the formula (III) 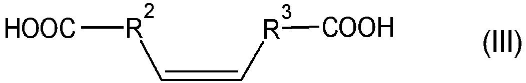 wherein
R² and R³ independently from each other are absent or a linear or branched C₁₋₆ alkylene moiety, or itaconic acid, or two acrylic acid moieties,
wherein attached to the double bond of said at least one unsaturated dicarboxylic acid of the general formula (III) is at least one amine of the following formula (IV) 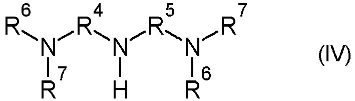
wherein
R⁴ and R⁵ independently from each other are a linear or branched C₁₋₆ alkylene moiety,
R⁶ and R⁷ independently from each other are a linear or branched C₁₋₁₈ alkyl moiety, preferably C₁ moiety, or are connected with each other so as to form a cyclic nitrogen-containing moiety, preferably cyclohexylamine or piperazine;
or a secondary amine of the formula R⁶-NH-R⁷, wherein R⁶ and R⁷ have the same meaning as above,
or imidazole or derivatives thereof,
or benzimidazole or derivatives thereof;
wherein in case two acrylic acid moieties are selected as component C), the amine is a primary amine H₂N-R⁸, wherein R⁸ is a residue R⁴-NR⁶R⁷, wherein R⁴, R⁶ and R⁷ are as defined above;
wherein optionally said amine of formula (IV) is in the form of an amine salt.

2. Dispersing agent according to claim 1, wherein said dispersing agent has the general formula (V) 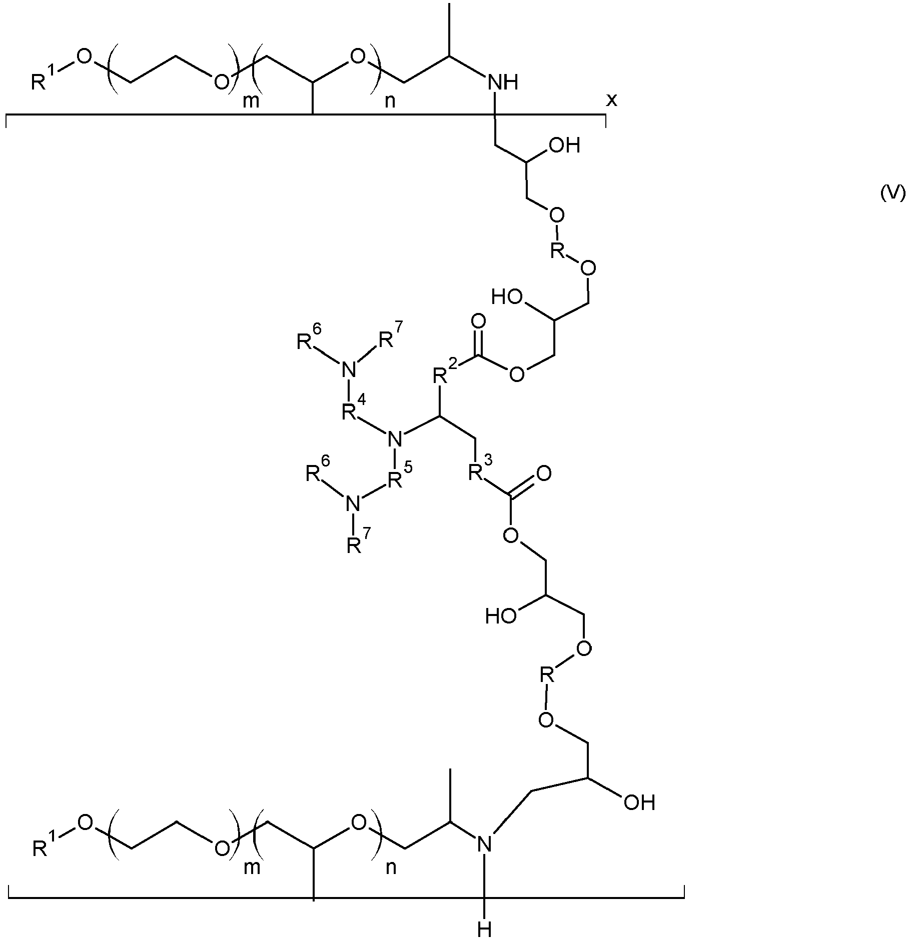 wherein R, R¹ to R⁷, m and n have the same meaning as in claim 1,
x is an integer in the range from 1 to 20, and
wherein one or more of the tertiary amino groups may be protonated or quaternized.

3. Dispersing agent according to claim 1 or 2, wherein R is a linear or branched C₂₋₆ alkylene moiety, preferably selected from the group consisting of -CH₂-,-CH₂CH₂-, and -CH₂CH₂CH₂-.

4. Dispersing agent according to any of the preceding claims, wherein
R¹ is a linear or branched C₁₋₄ alkyl moiety, preferably selected from the group consisting of -CH₃,-CH₂CH₃, and-CH₂CH₂CH₃, most preferably -CH₃,
m is an integer in the range from 1 to 10, preferably 2 to 8, and
n is an integer in the range from 5 to 40, preferably 10 to 30.

5. Dispersing agent according to any of the preceding claims, wherein R² and R³ independently from each other are absent or a linear or branched C₁₋₃ alkylene moiety.

6. Dispersing agent according to any of the preceding claims, wherein
R⁴ and R⁵ independently from each other are a linear or branched C₁₋₄ alkylene moiety,
R⁶ and R⁷ independently from each other are a linear or branched C₁₋₃ alkyl moiety, preferably methyl.

7. Dispersing agent according to any of the preceding claims, wherein the agent is in form of a halogenide salt, preferably a chloride salt, most preferably a benzyl chloride salt.

8. A process for manufacturing a dispersing agent according to any of claims 1 to 7, comprising the steps:
i) reacting at least one diglycidyl ether or diglycidylester having the formula (I) 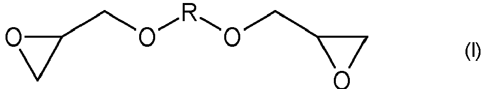 wherein R is as defined above,
with at least one polyether amine having the formula (II) 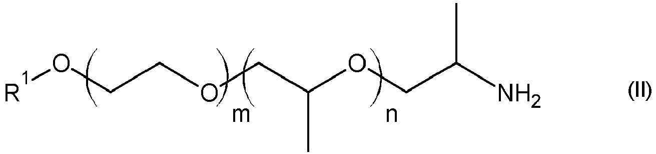 wherein R¹, m and n are as defined above, under heating, optionally in the presence of a solvent,
and with at least one unsaturated dicarboxylic acid of the formula (III) 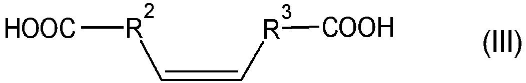 wherein R² and R³ are as defined above, under heating, optionally in the presence of a solvent,
or with itaconic acid, or with two acrylic acid moieties,
ii) reacting the intermediate product obtained in step i) with at least one amine of the following formula (IV) 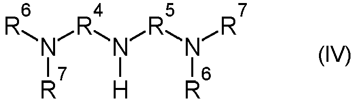 wherein R⁴, R⁵, R⁶ and R⁷ are as defined above, thus obtaining a compound, preferably of the compound of the formula (V),
or with a secondary amine of the formula R⁶-NH-R⁷, wherein R⁶ and R⁷ have the same meaning as above,
or with imidazole or derivatives thereof,
or with benzimidazole or derivatives thereof;
or in case two acrylic acid moieties are selected as component C), with a primary amine H₂N-R⁸, wherein R⁸ is a residue R⁴-NR⁶R⁷, wherein R⁴, R⁶ and R⁷ are as defined above;
under heating, optionally in the presence of a solvent,
iii) optionally converting at least one tertiary amino group of the compound, preferably of the compound of the formula (V), into a protonated or quaternized amino salt by reacting the compound, preferably of the compound of the formula (V), with an acid or an quaternization agent under heating, optionally in the presence of a solvent.

9. Process according to claim 8, wherein the process is carried out as a one-pot reaction.

10. Process according to claim 8 or 9, wherein in step i) first the at least one diglycidyl ether or diglycidylester having the formula (I) and the at least one polyether amine having the formula (II) are added together and allowed to react, before the at least one unsaturated dicarboxylic acid of the formula (III), or itaconic acid, or the two acrylic acid molecules, are added.

11. Process according to any of claims 8 to 10, wherein in step i) the polyether amine having the formula (II) and the diglycidyl ether or diglycidylester having the formula (I) are used in a molar ratio in a range from 5:1 to 1,5:1.

12. Process according to any of claims 8 to 11, wherein the quaternization agent is selected from the group consisting of an alkyl halogenide and an aralkyl halogenide, preferably an alkyl chloride or an aralkyl chloride, most preferably benzyl chloride.

13. Printing ink composition, comprising at least one pigment, at least one solvent and a dispersing agent according to any of claims 1 to 7.

14. Printing ink composition according to claim 13, wherein said composition is resin-free.

15. Use of a dispersing agent according to any of claims 1 to 7 as a dispersant in a printing ink composition.

## Patentansprüche

1. Ein Dispergiermittel, das ein Polymer mit einer Hauptkette ist, die aus den folgenden Komponenten a) bis c) hergestellt wird:
a) mindestens einen Diglycidylether oder Diglycidylester mit der Formel (I) 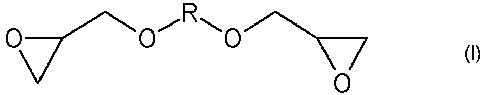 wobei R eine lineare oder verzweigte C₁₋₃₆-Alkyleneinheit, vorzugsweise C₂₋₁₈-, am meisten bevorzugt C₂₋₁₂-Einheit ist, oder eine Einheit der Formel 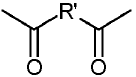 ist, wobei R' eine lineare oder verzweigte C₂₋₃₆-Alkyleneinheit, vorzugsweise C₂₋₁₈-, am meisten bevorzugt C₂₋₁₂-Einheit ist;
b) mindestens ein Polyetheramin mit der Formel (II) 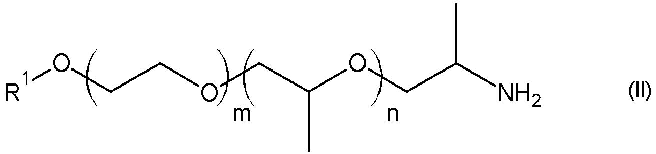 wobei
R¹ eine lineare oder verzweigte C₁₋₆ Alkyl-Einheit ist
m eine ganze Zahl im Bereich von 1 bis 50 ist
n eine ganze Zahl im Bereich von 1 bis 50 ist
c) mindestens eine ungesättigte Dicarbonsäure der Formel (III) 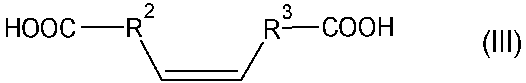 wobei
R² und R³ unabhängig voneinander nicht vorhanden oder eine lineare oder verzweigte C₁₋₆ -Alkyleneinheit oder Itaconsäure sind,
oder zwei Acrylsäureeinheiten,
wobei an die Doppelbindung der mindestens einen ungesättigten Dicarbonsäure der allgemeinen Formel (III) mindestens ein Amin der folgenden Formel (IV) 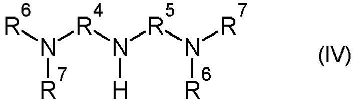
wobei
R⁴ und R⁵ unabhängig voneinander eine lineare oder verzweigte C₁₋₆-Alkylen-Einheit sind,
R⁶ und R⁷ unabhängig voneinander ein linearer oder verzweigter C₁₋₁₈-Alkylrest, vorzugsweise ein C₁₋₆-Alkylrest sind, oder so miteinander verbunden sind, dass sie eine cyclische stickstoffhaltige Einheit bilden, vorzugsweise Cyclohexylamin oder Piperazin;
oder ein sekundäres Amin der Formel R⁶-NH-R⁷, wobei R⁶und R⁷ die gleiche Bedeutung wie oben haben,
oder Imidazol oder deren Derivate,
oder Benzimidazol oder deren Derivate
gebunden ist;
wobei in dem Fall, dass zwei Acrylsäureeinheiten als Komponente c) ausgewählt werden, das Amin ein primäres Amin HN-R₂⁸ ist, wobei R⁸ ein Rest R⁴-NR⁶R⁷ ist, wobei R⁴, R⁶ und R⁷ wie oben definiert sind;
wobei gegebenenfalls das Amin der Formel (IV) in Form eines Aminsalzes vorliegt.

2. Dispergiermittel nach Anspruch 1, wobei das Dispergiermittel die allgemeine Formel (V) hat 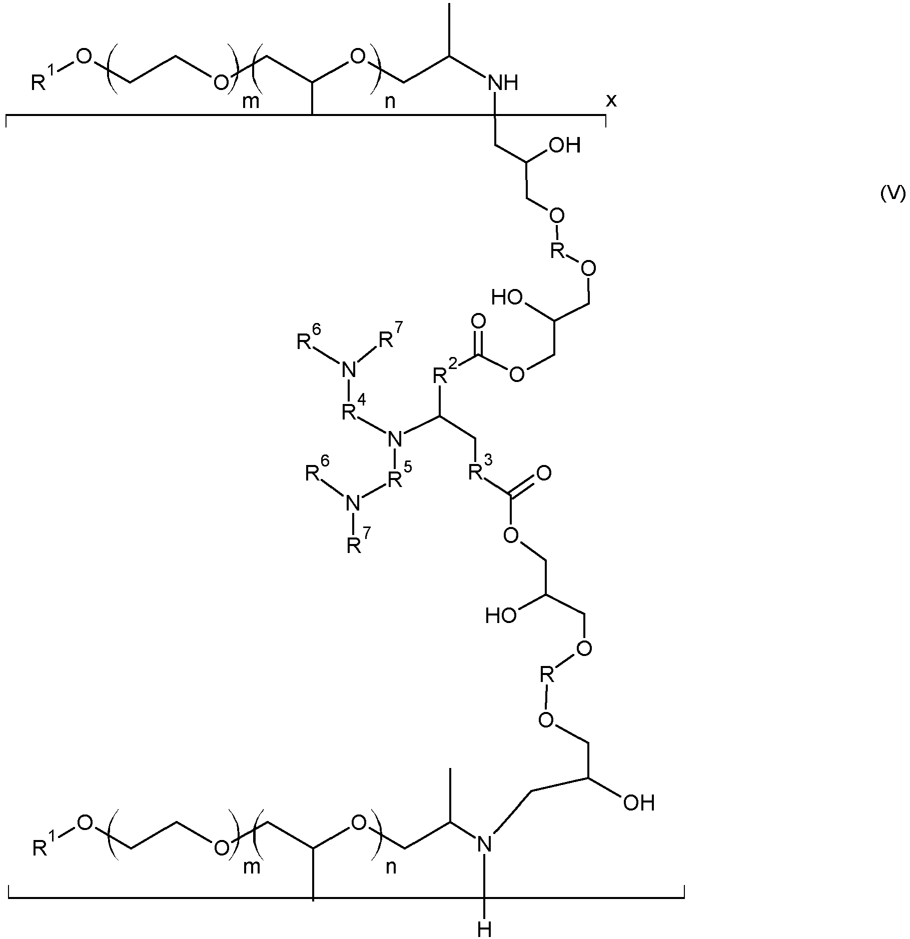 wobei R, R¹ bis R⁷, m und n die gleiche Bedeutung wie in Anspruch 1 haben,
x eine ganze Zahl im Bereich von 1 bis 20 ist, und
wobei eine oder mehrere der tertiären Aminogruppen protoniert oder quaternisiert sein können.

3. Dispergiermittel nach Anspruch 1 oder 2, wobei R eine lineare oder verzweigte C₂₋₆-Alkyleneinheit ist, vorzugsweise ausgewählt aus der Gruppe bestehend aus -CH₂-, -CH₂CH₂- und -CH₂CH₂CH₂-.

4. Dispergiermittel nach einem der vorhergehenden Ansprüche, wobei
R¹ eine lineare oder verzweigte C₁₋₄-Alkyleinheit ist, vorzugsweise ausgewählt aus der Gruppe bestehend aus -CH₃, - CH₂CH₃ und -CH₂CH₂CH₃, besonders bevorzugt -CH₃,
m eine ganze Zahl im Bereich von 1 bis 10, vorzugsweise 2 bis 8ist, und
n eine ganze Zahl im Bereich von 5 bis 40, vorzugsweise 10 bis 30 ist.

5. Dispergiermittel nach einem der vorhergehenden Ansprüche, wobei R² und R³ unabhängig voneinander nicht vorhanden sind oder eine lineare oder verzweigte C₁₋₃-Alkyleneinheit sind.

6. Dispergiermittel nach einem der vorhergehenden Ansprüche, wobei
R⁴ und R⁵ unabhängig voneinander eine lineare oder verzweigte C₁₋₄-Alkyleneinheit sind
R⁶ und R⁷ unabhängig voneinander eine lineare oder verzweigte C₁₋₃-Alkyleneinheit, vorzugsweise Methyl sind.

7. Dispergiermittel nach einem der vorhergehenden Ansprüche, wobei das Mittel in Form eines Halogenidsalzes, vorzugsweise eines Chloridsalzes, besonders bevorzugt eines Benzylchloridsalzes, vorliegt.

8. Verfahren zur Herstellung eines Dispersionsmittels nach einem der Ansprüche 1 bis 7, umfassend die Schritte:
i) Umsetzung von mindestens einem Diglycidylether oder Diglycidylester der Formel (I) 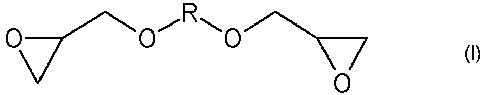 wobei R wie oben definiert ist,
mit mindestens einem Polyetheramin der Formel (II) 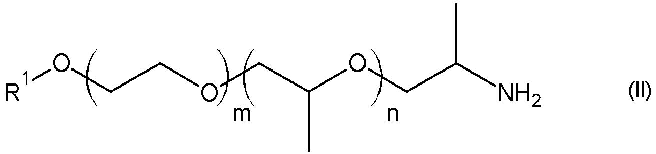 wobei R¹, m und n wie oben definiert sind,
unter Erhitzen, gegebenenfalls in Gegenwart eines Lösungsmittels,
und mit mindestens einer ungesättigten Dicarbonsäure der Formel (III) 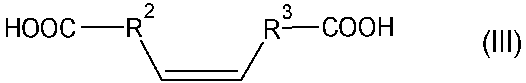
wobei R² und R³ wie oben definiert sind,
unter Erhitzen, gegebenenfalls in Anwesenheit eines Lösungsmittels,
oder mit Itaconsäure, oder mit zwei Acrylsäureeinheiten,
ii) Umsetzung des in Schritt i) erhaltenen Zwischenprodukts mit mindestens einem Amin der folgenden Formel (IV) 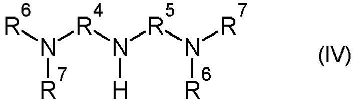 wobei R⁴, R⁵, R⁶ und R⁷ wie oben definiert sind, so dass man eine Verbindung, vorzugsweise eine Verbindung der Formel (V), erhält,
oder mit einem sekundären Amin der Formel R⁶-NH-R⁷, wobei R⁶ und R⁷ die gleiche Bedeutung wie oben haben,
oder mit Imidazol oder dessen Derivaten,
oder mit Benzimidazol oder dessen Derivaten;
oder, falls zwei Acrylsäureeinheiten als Komponente c) ausgewählt werden, mit einem primären Amin HN-R₂⁸, wobei R ein Rest R⁴-NR⁶R⁷ ist, wobei R⁴, R⁶ und R⁷ wie oben definiert sind;
unter Erhitzen, gegebenenfalls in Anwesenheit eines Lösungsmittels,
iii) gegebenenfalls Umwandlung mindestens einer tertiären Aminogruppe der Verbindung, vorzugsweise der Verbindung der Formel (V), in ein protoniertes oder quaternisiertes Aminsalz durch Umsetzung der Verbindung, vorzugsweise der Verbindung der Formel (V), mit einer Säure oder einem Quaternisierungsmittel unter Erhitzen, gegebenenfalls in Anwesenheit eines Lösungsmittels.

9. Verfahren nach Anspruch 8, wobei das Verfahren als Ein-Topf-Reaktion durchgeführt wird.

10. Verfahren nach Anspruch 8 oder 9, wobei man in Schritt i) zunächst den mindestens einen Diglycidylether oder Diglycidylester der Formel (I) und das mindestens eine Polyetheramin der Formel (II) zusammen gibt und reagieren lässt, bevor man die mindestens eine ungesättigte Dicarbonsäure der Formel (III) oder Itaconsäure oder die beiden Acrylsäuremoleküle zugibt.

11. Verfahren nach einem der Ansprüche 8 bis 10, wobei in Schritt i) das Polyetheramin mit der Formel (II) und der Diglycidylether oder Diglycidylester mit der Formel (I) in einem molaren Verhältnis im Bereich von 5:1 bis 1,5:1 verwendet werden.

12. Verfahren nach einem der Ansprüche 8 bis 11, wobei das Quaternisierungsmittel ausgewählt ist aus der Gruppe bestehend aus einem Alkylhalogenid und einem Aralkylhalogenid, vorzugsweise einem Alkylchlorid oder einem Aralkylchlorid, besonders bevorzugt Benzylchlorid.

13. Druckfarbenzusammensetzung, umfassend mindestens ein Pigment, mindestens ein Lösungsmittel und ein Dispergiermittel gemäss einem der Ansprüche 1 bis 7.

14. Druckfarbenzusammensetzung nach Anspruch 13, wobei die Zusammensetzung harzfrei ist.

15. Verwendung eines Dispergiermittels gemäss einem der Ansprüche 1 bis 7 als Dispergiermittel in einer Druckfarbenzusammensetzung.

## Revendications

1. Agent dispersant qui est un polymère avec un squelette préparé à partir des composants a) à c) suivants :
a) au moins un éther diglycidylique ou un ester diglycidylique répondant à la formule (I) 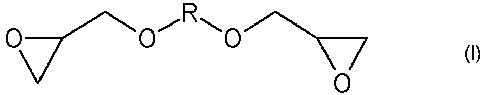 dans laquelle R est un fragment
C₁₋₃₆ alkylène linéaire ou ramifié, de préférence C₂₋₁₈, plus préférablement C₂₋₁₂,
ou un fragment de la formule 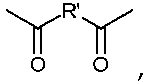 dans laquelle R' est un fragment C₂₋₃₆ alkylène linéaire ou ramifié, de préférence C₂₋₁₈, le plus préférablement C₂₋₁₂ ;
b) au moins une polyétheramine répondant à la formule (II) 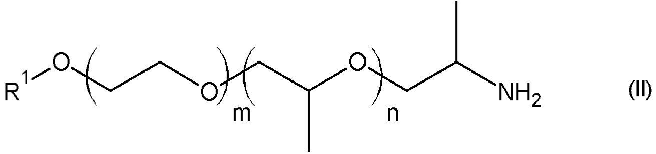 où
R¹ est un fragment linéaire ou ramifié C₁₋₆alkyle
m est un nombre entier dans la gamme de 1 à 50
n est un nombre entier dans la gamme de 1 à 50
c) au moins un acide dicarboxylique insaturé de formule (III) 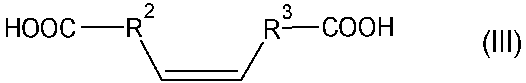 où R² et R³ indépendamment l'un de l'autre, sont absents ou représentent un fragment C₁₋₆ alkylène linéaire ou ramifiée, ou l'acide itaconique,
ou deux fragments d'acide acrylique,
dans laquelle, attachée à la double liaison dudit au moins un acide dicarboxylique insaturé de formule générale (III), se trouve au moins une amine de formule (IV) suivante 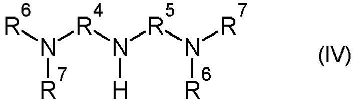
où
R⁴ et R⁵ représentent, indépendamment l'un de l'autre, un fragment C₁₋₆ alkylène linéaire ou ramifié,
R⁶ et R⁷ représentent,indépendamment l'un de l'autre, un fragment un fragment C₁₋₁₈ alkylène linéaire ou ramifié, de préférence un fragment C₁₋₆ alkyle, ou sont reliés l'un à l'autre de manière à former un fragment cyclique contenant de l'azote, de préférence la cyclohexylamine ou la pipérazine ;
ou une amine secondaire de formule R⁶-NH-R⁷, dans laquelle R⁶ et R⁷ ont la même signification que ci-dessus,
ou imidazole ou leurs dérivés,
ou benzimidazole ou leurs dérivés ;
où, dans le cas où deux fragments d'acide acrylique sont choisis comme composant c), l'amine est une amine primaire HN-R₂⁸, où R⁸ est un résidu R⁴-NR⁶R⁷, où R⁴, R⁶ et R⁷ sont tels que définis ci-dessus ;
dans laquelle, éventuellement, ladite amine de formule (IV) est sous la forme d'un sel d'amine.

2. Agent dispersant selon la revendication 1, dans lequel ledit agent dispersant a la formule générale (V) 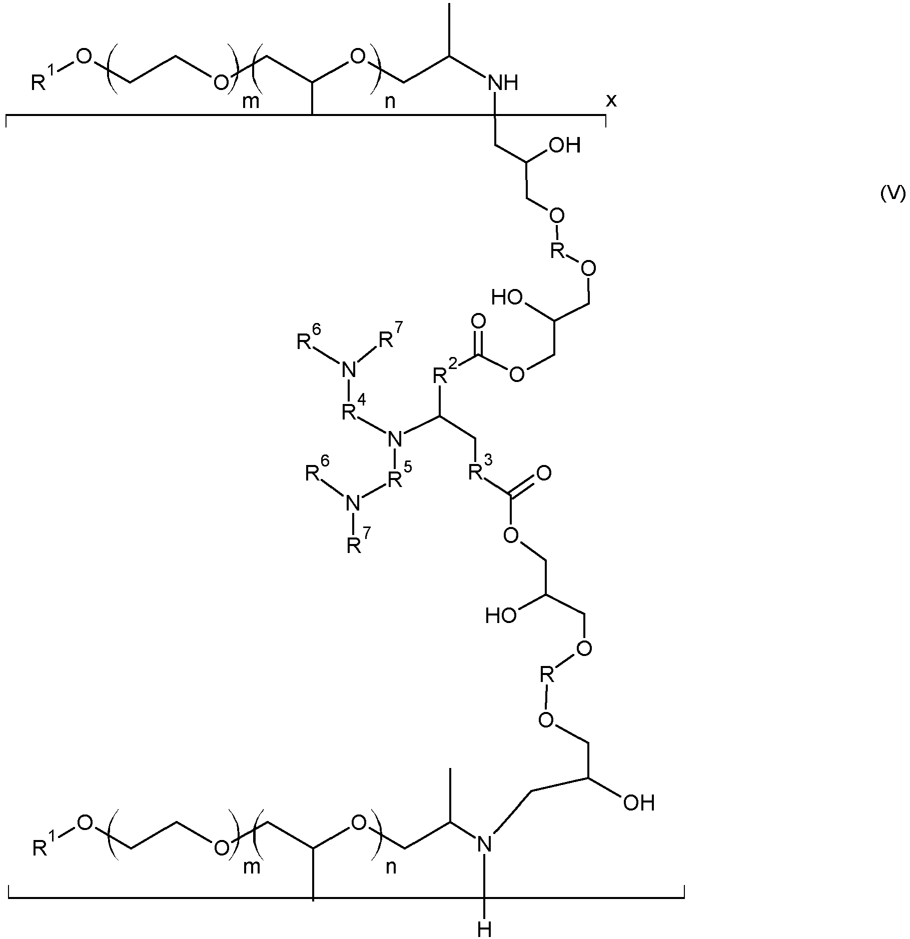 dans laquelle R, R¹ à R⁷, m et n ont la même signification que dans la revendication 1,
x est un nombre entier dans la gamme de 1 à 20, et
dans laquelle un ou plusieurs des groupes amine tertiaires peuvent être protonés ou quaternisés.

3. Agent dispersant selon la revendication 1 ou 2, dans lequel R est un fragment C₂₋₆ alkylène linéaire ou ramifié, de préférence choisi dans le groupe constitué par -CH₂-, -CH₂CH₂- et -CH₂CH₂CH₂-.

4. Agent dispersant selon l'une quelconque des revendications précédentes, dans lequel
R¹ est un fragment C₁₋₄ alkyle linéaire ou ramifié, de préférence choisi dans le groupe constitué par -CH₃,-CH₂CH₃ et -CH₂CH₂CH₃, de préférence -CH₃,
m est un nombre entier dans la gamme de 1 à 10, de préférence de 2 à 8, et
n est un nombre entier dans la gamme de 5 à 40, de préférence de 10 à 30.

5. Agent dispersant selon l'une quelconque des revendications précédentes, dans lequel R² et R³ sont, indépendamment l'un de l'autre, absents ou représentent un fragment C₁₋₃-alkylène linéaire ou ramifié.

6. Agent dispersant selon l'une quelconque des revendications précédentes, dans lequel
R⁴ et R⁵ représentent, indépendamment l'un de l'autre, un fragment C₁₋₄-alkylène linéaire ou ramifié,
R⁶ et R représentent, indépendamment l'un de l'autre, un fragmentC₁₋₃-alkyle linéaire ou ramifié, de préférence un groupe méthyle.

7. Agent dispersant selon l'une quelconque des revendications précédentes, dans lequel l'agent se présente sous la forme d'un sel d'halogénure, de préférence un sel de chlorure, plus préférablement un sel de chlorure de benzyle.

8. Procédé de fabrication d'un agent dispersant selon l'une quelconque des revendications 1 à 7, comprenant les étapes
i) la réaction d'au moins un éther diglycidylique ou un ester diglycidylique répondant à la formule (I) 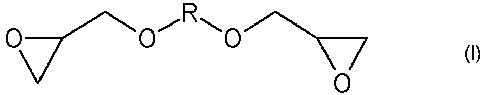 dans laquelle R est tel que défini ci-dessus,
avec au moins une polyétheramine répondant à la formule (II) 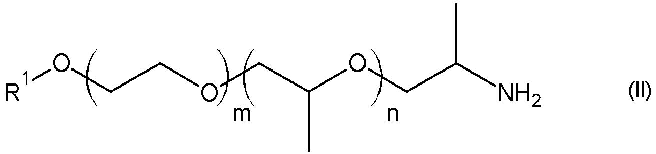 dans laquelle R¹, m et n sont tels que définis ci-dessus,
sous chauffage, éventuellement en présence d'un solvant,
et avec au moins un acide dicarboxylique insaturé de formule (III) 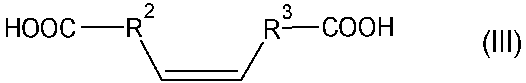
dans laquelle R² et R³ sont tels que définis ci-dessus,
sous chauffage, éventuellement en présence d'un solvant,
ou avec de l'acide itaconique, ou avec deux fragments d'acide acrylique,
ii) la réaction du produit intermédiaire obtenu dans l'étape i) avec au moins une amine de la formule suivante (IV) 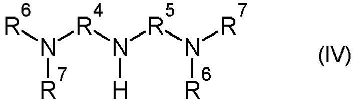 où R⁴, R⁵, R⁶ et R⁷ sont tels que définis ci-dessus, obtenant ainsi un composé, de préférence du composé de formule (V),
ou avec une amine secondaire de formule R⁶-NH-R⁷, dans laquelle R⁶ et R⁷ ont la même signification que ci-dessus,
ou avec de l'imidazole ou ses dérivés,
ou avec le benzimidazole ou ses dérivés ;
ou dans le cas où deux fragments d'acide acrylique sont choisis comme composant c), avec une amine primaire HN-R₂⁸, où R⁸ est un résidu R⁴-NR⁶R⁷, où R⁴, R⁶ et R⁷ sont tels que définis ci-dessus ;
sous chauffage, éventuellement en présence d'un solvant,
iii) éventuellement la conversion d'au moins un groupe amine tertiaire du composé, de préférence du composé de formule (V), en un sel aminé protoné ou quaternisé par réaction du composé, de préférence du composé de formule (V), avec un acide ou un agent de quaternisation sous chauffage, éventuellement en présence d'un solvant.

9. Procédé selon la revendication 8, dans lequel le procédé est mis en œuvre sous la forme d'une réaction à un seul pot.

10. Procédé selon la revendication 8 ou 9, dans lequel, dans l'étape i), on ajoute d'abord ensemble le au moins un éther diglycidylique ou un ester diglycidylique de formule (I) et la au moins une polyétheramine de formule (II) et on les laisse réagir, avant d'ajouter le au moins un acide dicarboxylique insaturé de formule (III), ou l'acide itaconique, ou les deux molécules d'acide acrylique.

11. Procédé selon l'une quelconque des revendications 8 à 10, dans lequel, dans l'étape i), la polyétheramine ayant la formule (II) et l'éther diglycidylique ou l'ester diglycidylique ayant la formule (I) sont utilisés dans un rapport molaire dans une gamme de 5:1 à 1,5:1.

12. Procédé selon l'une quelconque des revendications 8 à 11, dans lequel l'agent de quaternisation est choisi dans le groupe constitué par un halogénure d'alkyle et un halogénure d'aralkyle, de préférence un chlorure d'alkyle ou un chlorure d'aralkyle, tout particulièrement le chlorure de benzyle.

13. Composition d'encre d'impression, comprenant au moins un pigment, au moins un solvant et un agent dispersant selon l'une quelconque des revendications 1 à 7.

14. Composition d'encre d'impression selon la revendication 13, dans laquelle ladite composition est exempte de résine.

15. Utilisation d'un agent dispersant selon l'une quelconque des revendications 1 à 7 comme agent dispersant dans une composition d'encre d'impression.
